# EUROPEAN PATENT APPLICATION

(11) **EP 4 636 527 A1**
(43) Date of publication of application: **22.10.2025**
(21) Application number: 23914535.2
(22) Date of filing: 25.12.2023
(51) Int. Cl.: G05D 1/43

(54) **OBSTACLE AVOIDANCE METHOD AND APPARATUS FOR AUTONOMOUS MOBILE ROBOT**

(30) Priority: 03.01.2023 CN 202310003112
(71) Applicant: Beijing Roborock Innovation Technology Co., Ltd., Beijing 102206 (CN)
(72) Inventor: ZHANG, Lei, Beijing 102206 (CN)
(74) Representative: Manitz Finsterwald Patent- und Rechtsanwaltspartnerschaft mbB
(86) International application number: PCT/CN2023/141529
(87) International publication number: WO 2024/146403

(57) **Abstract**

An obstacle avoidance method and apparatus for an autonomous mobile robot (500, 602). The autonomous mobile robot (500, 602) comprises a first sensor and a second sensor. The obstacle avoidance method comprises: by means of the first sensor, carrying out first information acquisition on a first obstacle of which an outermost surface has a first height range, and then configuring the autonomous mobile robot (500, 602) to travel along the outermost surface of the first height range of the first obstacle; and by means of the second sensor, carrying out second information acquisition on a second obstacle of which an outermost surface has a second height range, and then configuring the autonomous mobile robot (500, 602) to carry out an obstacle avoidance traveling action along an outer surface of the second obstacle within a part of the height range (202).

## Description

The present application claims priority to Chinese Patent Application No. 202310003112.1, filed with China National Intellectual Property Administration on January 3, 2023, and entitled "OBSTACLE AVOIDANCE METHOD AND APPARATUS FOR SELF-MOBILE ROBOT", the content of which is incorporated herein by reference in its entirety.

### TECHNICAL FIELD

The present disclosure relates to the field of self-mobile robot technologies, and in particular, to an obstacle avoidance method and apparatus for a self-mobile robot.

### BACKGROUND

The self-mobile robot often needs to walk along an obstacle when traveling. If the obstacle is of a proper height or is disposed perpendicular to the ground, for example, perpendicular to a wall, the self-mobile robot may effectively achieve the action of walking along the obstacle based on the detection result of a wall-following sensor.

However, in an actual environment, a large number of irregular-shaped obstacles are not disposed perpendicular to the ground, or the heights thereof affect the normal detection of the wall-following sensor. In this case, it is difficult for the wall-following sensor to play an effective role, and other types of sensors, such as a laser sensor, need to be used.

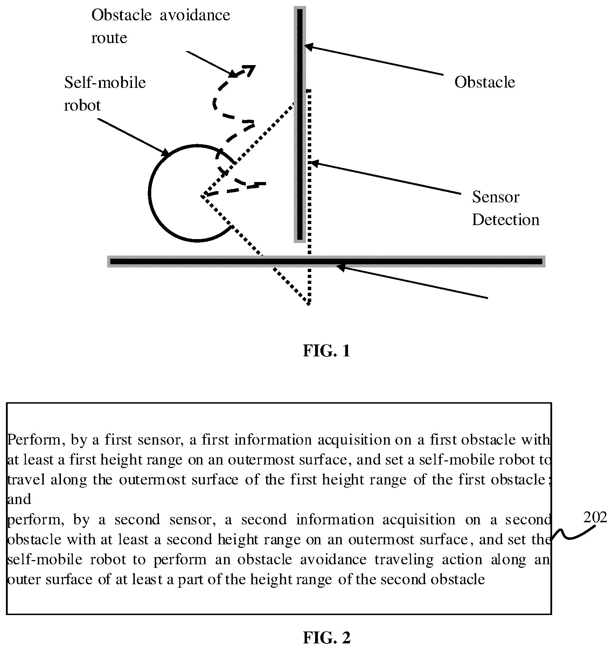

As shown in FIG. 1, the self-mobile robot uses a laser sensor to scan an irregular-shaped obstacle. In the process, a condition for triggering the self-mobile robot to walk around the obstacle is that a distance between the obstacle that reaches an obstacle avoidance height and the self-mobile robot is less than or equal to a specified distance. In this way, when the self-mobile robot is close enough to the obstacle in FIG. 1, a corresponding obstacle avoidance action is triggered, and the obstacle avoidance action generally involves turning left first, then traveling, and then turning right. However, after the obstacle avoidance action is completed, due to the irregular characteristics of the black dotted obstacle, the self-mobile robot will soon detect the obstacle within the specified distance again, and the obstacle avoidance action is triggered again to form the obstacle avoidance route shown in FIG. 1, until the self-mobile robot completes walking along the obstacle.

However, such an unreasonable obstacle avoidance action increases the invalid movement distance of the self-mobile robot, resulting in a certain loss of power, and meanwhile, the traveling action of the self-mobile robot looks less intelligent, affecting user experience. In addition, due to the unreasonable obstacle avoidance action, a missed cleaning area is easily generated, affecting the actual operation effect of the self-mobile robot.

Therefore, how to set an intelligent obstacle avoidance route with high efficiency and low energy consumption for the self-mobile robot becomes an urgent technical problem to be solved.

### SUMMARY

Embodiments of the present disclosure provide an obstacle avoidance method and apparatus for a self-mobile robot, aiming to address the technical problem of low efficiency and high energy consumption of the self-mobile robot caused by an unreasonable obstacle avoidance route in the related art.

In a first aspect, the embodiments of the present disclosure provide an obstacle avoidance method for a self-mobile robot. The self-mobile robot includes a first sensor and a second sensor, and the obstacle avoidance method includes: performing, by the first sensor, a first information acquisition on a first obstacle with at least a first height range on an outermost surface, and setting the self-mobile robot to travel along the outermost surface of the first height range of the first obstacle; and performing, by the second sensor, a second information acquisition on a second obstacle with at least a second height range on an outermost surface, and setting the self-mobile robot to perform an obstacle avoidance traveling action along an outer surface of at least a part of the height range of the second obstacle, where the second height range is not completely the same as the first height range.

In an embodiment, the first sensor is a wall-following sensor, and the first obstacle includes a wall; the second sensor is a non-wall-following sensor.

In an embodiment, the first height range is a perpendicular arrangement height range or a perpendicular measurement height range of the first sensor; the second height range is a height range of the self-mobile robot.

In an embodiment, performing, by the second sensor, the second information acquisition on the second obstacle with at least the second height range on the outermost surface, includes: acquiring, by the second sensor, three-dimensional point cloud data for the second obstacle with at least the second height range on the outermost surface; setting the self-mobile robot to perform the obstacle avoidance traveling action along the outer surface of at least the part of the height range of the second obstacle, includes: determining a perpendicular projection contour line of the second obstacle based on the three-dimensional point cloud data; determining an obstacle avoidance route based on the perpendicular projection contour line; and acquiring, in response to a distance between the self-mobile robot and any target obstacle being less than or equal to a first predetermined distance, an obstacle avoidance route corresponding to the target obstacle from set obstacle avoidance routes as a traveling route for the self-mobile robot to perform the obstacle avoidance traveling action.

In an embodiment, determining the perpendicular projection contour line of the second obstacle based on the three-dimensional point cloud data, includes: performing clustering on the three-dimensional point cloud data to obtain a point cloud cluster corresponding to the second obstacle; determining a partial convex hull envelope surface of the second obstacle based on the point cloud cluster; and acquiring a perpendicular projection contour line of the partial convex hull envelope surface on a ground plane.

In an embodiment, acquiring the three-dimensional point cloud data, includes: acquiring first position information of obstacle feature points, where the first position information includes horizontal position information and height information; and generating a three-dimensional rasterized map with the three-dimensional point cloud data based on the first position information of the obstacle feature points.

In an embodiment, before acquiring the first position information of the obstacle feature points, the method further includes: acquiring an obstacle type; allowing, in a case that a determination result is that the type of the second obstacle is the specified type, to enter the step of acquiring the first position information of the obstacle feature points; and entering, in a case that the determination result is that the type of the second obstacle is not the specified type, the step of performing, by the first sensor, the first information acquisition on the first obstacle with at least the first height range on the outermost surface.

In an embodiment, acquiring the three-dimensional point cloud data, includes: determining that an obstacle avoidance route detection start condition is satisfied, and acquiring the three-dimensional point cloud data. The obstacle avoidance route detection start condition is any one or a combination of more of the following: a duration from a start of last obstacle avoidance route detection or generation of the obstacle avoidance route reaches a specified duration; a traveling distance from a historical position at an end of the last obstacle avoidance route detection to a current position reaches a second predetermined distance; the set obstacle avoidance routes are all completely traveled; and a number of untraveled routes in all the set obstacle avoidance routes is less than or equal to a specified number.

In an embodiment, performing clustering on the three-dimensional point cloud data to obtain the point cloud cluster corresponding to the second obstacle, includes: determining feature point sets in which a point-to-point distance is less than or equal to a third predetermined distance in the three-dimensional point cloud data; and performing clustering on each feature point set to obtain a corresponding point cloud cluster for each feature point set.

In an embodiment, determining the obstacle avoidance route based on the perpendicular projection contour line, includes: performing smoothing processing at an intersection position of each two adjacent line segments of the perpendicular projection contour line to obtain the obstacle avoidance route; or offsetting the perpendicular projection contour line by a specified offset distance toward a direction away from the second obstacle as the obstacle avoidance route.

In an embodiment, acquiring the obstacle avoidance route corresponding to the target obstacle from several said set obstacle avoidance routes, includes: determining matching between first position information of the target obstacle and the acquired three-dimensional point cloud data or the acquired point cloud cluster; and determining that the first position information matches the acquired three-dimensional point cloud data or the acquired point cloud cluster, and determining an obstacle avoidance route corresponding to the acquired three-dimensional point cloud data or the acquired point cloud cluster as the obstacle avoidance route for the target obstacle.

In a second aspect, the embodiments of the present disclosure provide an obstacle avoidance apparatus for a self-mobile robot. The self-mobile robot includes a first sensor and a second sensor, and the obstacle avoidance apparatus includes: a normal obstacle avoidance traveling unit, configured to perform, by the first sensor, a first information acquisition on a first obstacle with at least a first height range on an outermost surface, and set the self-mobile robot to travel along the outermost surface of the first height range of the first obstacle; and a special obstacle avoidance traveling unit, configured to perform, by the second sensor, a second information acquisition on a second obstacle with at least a second height range on an outermost surface, and set the self-mobile robot to perform an obstacle avoidance traveling action along an outer surface of at least a part of the height range of the second obstacle, where the second height range is not completely the same as the first height range.

In an embodiment, the first sensor is a wall-following sensor, and the first obstacle includes a wall; the second sensor is a non-wall-following sensor.

In an embodiment, the first height range is a perpendicular arrangement height range or a perpendicular measurement height range of the first sensor; the second height range is a height range of the self-mobile robot.

In an embodiment, the special obstacle avoidance traveling unit includes: a three-dimensional point cloud data acquisition unit, configured to acquire, by the second sensor, three-dimensional point cloud data for the second obstacle with at least the second height range on the outermost surface; a projection contour line acquisition unit, configured to determine a perpendicular projection contour line of the second obstacle based on the three-dimensional point cloud data; an obstacle avoidance route setting unit, configured to determine an obstacle avoidance route based on the perpendicular projection contour line; and an obstacle avoidance control unit, configured to acquire, in response to a distance between the self-mobile robot and any target obstacle being less than or equal to a first predetermined distance, an obstacle avoidance route corresponding to the target obstacle from set obstacle avoidance routes as a traveling route for the self-mobile robot to perform the obstacle avoidance traveling action.

In an embodiment, the projection contour line acquisition unit includes: a point cloud data clustering unit, configured to perform clustering on the three-dimensional point cloud data to obtain a point cloud cluster corresponding to the second obstacle; an envelope surface generation unit, configured to determine a partial convex hull envelope surface of the second obstacle based on the point cloud cluster; and a projection contour line acquisition unit, configured to acquire a perpendicular projection contour line of the partial convex hull envelope surface on a ground plane.

In an embodiment, the three-dimensional point cloud data acquisition unit is configured to: acquire first position information of obstacle feature points, where the first position information includes horizontal position information and height information; and generate a three-dimensional rasterized map with the three-dimensional point cloud data based on the first position information of the obstacle feature points.

In an embodiment, the apparatus further includes: a sensor selection unit, configured to acquire an obstacle type before the three-dimensional point cloud data acquisition unit acquires the first position information; determine that the obstacle type is the specified type, and allow to acquire the first position information of the obstacle feature points; and determine that the obstacle type is not the specified type, and enter the step of performing, by the first sensor, the first information acquisition on the first obstacle with at least the first height range on the outermost surface.

In an embodiment, the three-dimensional point cloud data acquisition unit is configured to: determine that an obstacle avoidance route detection start condition is satisfied, and acquire the three-dimensional point cloud data. The obstacle avoidance route detection start condition is any one or a combination of more of the following: a duration from a start of last obstacle avoidance route detection or generation of the obstacle avoidance route reaches a specified duration; a traveling distance from a historical position at an end of the last obstacle avoidance route detection to a current position reaches a second predetermined distance; the set obstacle avoidance routes are all completely traveled; and a number of untraveled routes in all the set obstacle avoidance routes is less than or equal to a specified number.

In an embodiment, the point cloud data clustering unit is configured to: determine feature point sets in which a point-to-point distance is less than or equal to a third predetermined distance in the three-dimensional point cloud data; and perform clustering on each feature point set to obtain a corresponding point cloud cluster for each feature point set.

In an embodiment, the obstacle avoidance route setting unit is configured to: perform smoothing processing at an intersection position of each two adjacent line segments of the perpendicular projection contour line to obtain the obstacle avoidance route; or offset the perpendicular projection contour line by a specified offset distance toward a direction away from the second obstacle as the obstacle avoidance route.

In an embodiment, the obstacle avoidance control unit is configured to: determine matching between first position information of the target obstacle and the acquired three-dimensional point cloud data or the acquired point cloud cluster; and determine that the first position information matches the acquired three-dimensional point cloud data or the acquired point cloud cluster, and determine an obstacle avoidance route corresponding to the acquired three-dimensional point cloud data or the acquired point cloud cluster as the obstacle avoidance route for the target obstacle.

In a third aspect, the embodiments of the present disclosure provide a self-mobile robot. The self-mobile robot includes: at least one processor; and a memory communicatively connected to the at least one processor, where the memory stores instructions executable by the at least one processor, and the instructions are configured for performing the method according to the first aspect.

In a fourth aspect, the embodiments of the present disclosure provide a computer-readable storage medium. The computer-readable storage medium stores computer-executable instructions for performing a process of the method according to the first aspect.

According to the above technical solutions, in response to the technical problem of low efficiency and high energy consumption of the self-mobile robot caused by an unreasonable obstacle avoidance route in the related art, first, if a first obstacle with at least a first height range on the outermost surface is detected, a first sensor is preferentially used, such that the self-mobile robot can travel smoothly along the wall. If a second obstacle with at least a second height range on the outermost surface is detected, for example, a lower obstacle, a higher overhanging obstacle, or an obstacle with a non-perpendicular surface, such as a conical obstacle, for these obstacles, if only the wall-following sensor is used, although the middle height of the obstacle corresponds to the detection range of the wall-following sensor, the wall-following sensor cannot detect the bottom position of the obstacle farther outside, and only using the wall-following sensor will cause the self-mobile robot to be stuck by the bottom of the obstacle. In this case, a second sensor other than the wall-following sensor may be preferentially used to ensure the smooth traveling of the self-mobile robot.

According to the above technical solutions, for different obstacles, the self-mobile robot can directly travel smoothly along the outer edge contour of the obstacle, such that the obstacle avoidance intelligence of the self-mobile robot is improved, and thus the self-mobile robot not only avoids the obstacle but also maximizes the movable range, thereby reducing the missed area in the cleaning process and improving the cleaning effect of the self-mobile robot.

### BRIEF DESCRIPTION OF THE DRAWINGS

The drawings, which are incorporated into and constitute a part of the specification, illustrate embodiments consistent with the present disclosure and are used in conjunction with the specification to explain the principles of the present disclosure. Apparently, the drawings in the following description illustrate merely some embodiments of the present disclosure, and those of ordinary skill in the art may still derive other drawings from these drawings without creative efforts.
FIG. 1 shows a schematic diagram of an obstacle avoidance route of a self-mobile robot in the related art;
FIG. 2 shows a flowchart of an obstacle avoidance method according to an embodiment of the present disclosure;
FIG. 3 shows a flowchart of an obstacle avoidance method according to another embodiment of the present disclosure;
FIG. 4 shows a schematic diagram of an obstacle avoidance route of a self-mobile robot according to an embodiment of the present disclosure;
FIG. 5 shows a block diagram of an obstacle avoidance apparatus according to another embodiment of the present disclosure; and
FIG. 6 shows a block diagram of a self-mobile robot according to an embodiment of the present disclosure.

### DETAILED DESCRIPTION

Exemplary embodiments will now be described more comprehensively with reference to the drawings. However, the exemplary embodiments may be implemented in various forms, and should not be understood as being limited to the examples described herein. On the contrary, these embodiments are provided to make the present disclosure more comprehensive and complete, and comprehensively convey the idea of the exemplary embodiments to a person skilled in the art. The described features, structures, or characteristics may be combined in one or more embodiments in any suitable manner. In the following description, many specific details are provided to give a full understanding of the embodiments of the present disclosure. However, those skilled in the art will appreciate that the technical solutions of the present disclosure may be practiced without one or more of the specific details, or other methods, components, apparatuses, steps, etc., may be employed. In other instances, well-known technical solutions are not shown or described in detail to avoid obscuring aspects of the present disclosure.

In addition, the drawings are only schematic illustrations of the present disclosure and are not necessarily drawn to scale. The same reference numerals in the drawings indicate the same or similar parts, and thus, repeated description thereof will be omitted. Some of the block diagrams shown in the drawings are functional entities, which are not necessarily required to correspond to physically or logically independent entities. These functional entities may be implemented in the form of software, or in one or more hardware modules or integrated circuits, or across different networks and/or processor apparatuses and/or microcontroller apparatuses.

FIG. 2 shows a flowchart of an obstacle avoidance method according to an embodiment of the present disclosure.

As shown in FIG. 2, in the obstacle avoidance method according to an embodiment of the present disclosure, the self-mobile robot includes a first sensor and a second sensor. Specifically, the obstacle avoidance method includes:

In step 202, a first information acquisition is performed by the first sensor on a first obstacle with at least a first height range on an outermost surface, and the self-mobile robot is set to travel along the outermost surface of the first height range of the first obstacle; and a second information acquisition is performed by the second sensor on a second obstacle with at least a second height range on an outermost surface, and the self-mobile robot is set to perform an obstacle avoidance traveling action along the outer surface of at least a part of the height range of the second obstacle.

The first sensor is a wall-following sensor, the first obstacle includes a wall, and the first height range is a perpendicular arrangement height range or a perpendicular measurement height range of the first sensor. That is, the wall-following sensor has a certain arrangement height or detection height, and can continuously detect the surface of the obstacle within the height, such that the self-mobile robot performs a walking action along the obstacle at a specific distance from the surface, typically used for walking along the wall. Certainly, for other obstacles whose outermost surfaces are within the range of the detection height, the self-mobile robot can also walk along the obstacles.

However, not all obstacles are walls or have a regular shape like a wall. For such a second obstacle, a second sensor may be provided to perform a second information acquisition on the second obstacle with at least a second height range on the outermost surface, and the self-mobile robot is set to perform an obstacle avoidance traveling action along the outer surface of at least a part of the height range of the second obstacle, so as to achieve the walking of the self-mobile robot along the obstacle. The second sensor is a non-wall-following sensor, and includes, but is not limited to, any apparatus that can perform distance detection, such as a camera, a structured light sensor, and a laser ranging sensor.

On this basis, if the first obstacle with at least the first height range on the outermost surface is detected, the first sensor is preferentially used, such that the self-mobile robot can travel smoothly along the wall. If a second obstacle with at least a second height range on the outermost surface is detected, for example, a lower obstacle, a higher overhanging obstacle, or an obstacle with a non-perpendicular surface, such as a conical obstacle, for these obstacles, if only the wall-following sensor is used, although the middle height of the obstacle corresponds to the detection range of the wall-following sensor, the wall-following sensor cannot detect the bottom position of the obstacle farther outside, and only using the wall-following sensor will cause the self-mobile robot to be stuck by the bottom of the obstacle. In this case, a second sensor other than the wall-following sensor may be preferentially used to ensure the smooth traveling of the self-mobile robot.

According to the above technical solutions, for different obstacles, the self-mobile robot can directly travel smoothly along the outer edge contour of the obstacle, such that the obstacle avoidance intelligence of the self-mobile robot is improved, and thus the self-mobile robot not only avoids the obstacle but also maximizes the movable range, thereby reducing the missed area in the cleaning process and improving the cleaning effect of the self-mobile robot.

In addition, the second height range is not completely the same as the first height range. In an embodiment, the second height range is the height range of the self-mobile robot. That is, the self-mobile robot can at least detect an irregular obstacle within the height range thereof, and achieve smooth traveling along the irregular obstacle through the second sensor.

Further, the second height range may also be a height range higher than that of the self-mobile robot, such that the self-mobile robot can detect an irregular obstacle higher than the height range thereof and travel smoothly along the obstacle.

It should be added that when acquiring information by the sensor, the self-mobile robot only needs to obtain at least obstacle information within the height range thereof. During traveling, the self-mobile robot usually does not touch an obstacle whose height exceeds the height range of the self-mobile robot; that is, the obstacle whose height exceeds the height range of the self-mobile robot generally does not hinder the traveling of the self-mobile robot.

In an embodiment, performing the second information acquisition, by the second sensor, on the second obstacle with at least the second height range on the outermost surface, includes: acquiring, by the second sensor, three-dimensional point cloud data for the second obstacle with at least the second height range on the outermost surface.

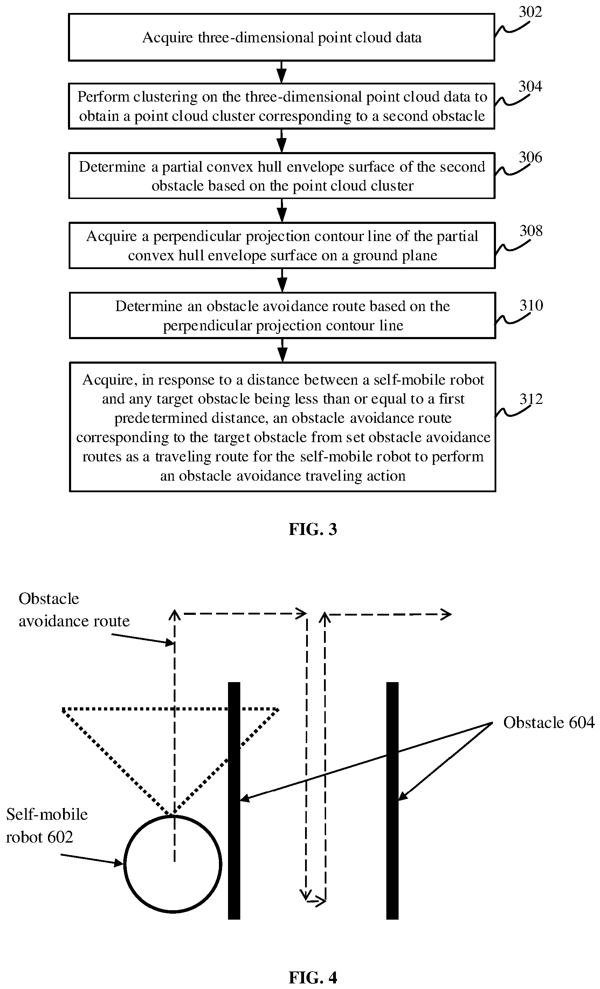

The self-mobile robot may acquire the three-dimensional point cloud data of the second obstacle by the second sensor, and the three-dimensional point cloud data reflects the distribution of the second obstacle. Further, the self-mobile robot may determine to perform the obstacle avoidance traveling action along the outer surface of at least a part of the height range of the second obstacle based on the three-dimensional point cloud data, as a traveling route for the self-mobile robot to avoid the second obstacle. The process of determining, by the self-mobile robot, the traveling route based on the three-dimensional point cloud data of the second obstacle is analyzed in detail below with reference to FIG. 3.

As shown in FIG. 3, an obstacle avoidance method according to another embodiment of the present disclosure includes:

In step 302, three-dimensional point cloud data is acquired.

The self-mobile robot may acquire the three-dimensional point cloud data by a sensor, and the three-dimensional point cloud data reflects the distribution of a second obstacle detected by a second sensor.

It should be noted that when acquiring information by the sensor, the self-mobile robot only needs to obtain at least obstacle information within the height range thereof; therefore, when acquiring the three-dimensional point cloud data, the self-mobile robot only needs to obtain the three-dimensional point cloud data corresponding to the part of the second obstacle detected within the height range of the self-mobile robot.

The point in the three-dimensional point cloud data includes obstacle feature points. In an embodiment, step 302 specifically includes: acquiring the first position information of the obstacle feature points, where the first position information includes horizontal position information and height information. Next, a three-dimensional rasterized map with the three-dimensional point cloud data is generated based on the first position information of the obstacle feature points. The first position information may be acquired by any one of a perpendicular line laser sensor, a horizontal line laser sensor, or a 3D TOF sensor. Certainly, the self-mobile robot may also adopt any one or more sensors of other types, as long as the height of and the distance to the obstacle can be detected, which is not limited herein.

The perpendicular line laser sensor is configured to emit a laser line substantially perpendicular to a plane on which the self-mobile robot is located, the horizontal line laser sensor is configured to emit a laser line substantially parallel to the plane on which the self-mobile robot is located, and the 3D TOF sensor is configured to emit modulated near-infrared light, which is reflected after encountering an obstacle. The distance to the obstacle can be determined by calculating the difference value between the time when the light is emitted and the time when the reflected light is received.

In an embodiment, the perpendicular line laser sensor, the horizontal line laser sensor, or the 3D TOF sensor can all be fixedly disposed on the self-mobile robot.

In step 304, clustering is performed on the three-dimensional point cloud data to obtain a point cloud cluster corresponding to the second obstacle.

The three-dimensional point cloud data is clustered, that is, the obstacle feature points in the three-dimensional rasterized map are clustered, such that associated obstacle feature points are clustered into one type as a point cloud cluster, which corresponds to one obstacle. In other words, each obstacle detected by the self-mobile robot in the current environment corresponds to one point cloud cluster, and each point cloud cluster reflects the position information and shape information of one obstacle in the current environment. The clustering method includes, but is not limited to, a K-MEANS algorithm, a K-MEDOIDS algorithm, a CLARANS algorithm, a BIRCH algorithm, a CURE algorithm, a CHAMELEON algorithm, a DBSCAN algorithm, an OPTICS algorithm, a DENCLUE algorithm, a STING algorithm, a CLIQUE algorithm, a WAVE-CLUSTER algorithm, and the like.

In an embodiment, step 304 includes: determining feature point sets in which a point-to-point distance is less than or equal to a third predetermined distance in the three-dimensional point cloud data; and performing clustering on each feature point set to obtain a corresponding point cloud cluster for each feature point set.

If the distance between two obstacle feature points is less than or equal to the third predetermined distance, that is, the distance between the two obstacle feature points is close enough, it is determined that the two obstacle feature points are associated and belong to the same obstacle. Therefore, clustering may be performed on the feature point set consisting of the obstacle feature points that are close enough in distance to obtain the point cloud cluster corresponding to the second obstacle.

In step 306, a partial convex hull envelope surface of the second obstacle is determined based on the point cloud cluster.

After all obstacle feature points in the point cloud cluster are connected, a partial convex hull envelope surface is formed. Since the point cloud cluster is used to reflect the position information and shape information of the obstacle, the partial convex hull envelope surface may be used as the envelope surface of the obstacle.

In an embodiment, obstacle feature points with a point-to-point distance being less than a fourth predetermined distance in the point cloud cluster are connected to obtain obstacle feature lines, then obstacle feature planes are generated based on the obstacle feature lines and obstacle feature points with a perpendicular distance thereof being less than a fifth predetermined distance, and a plurality of generated obstacle feature planes are extended to intersect, thus obtaining the partial convex hull envelope surface of the second obstacle.

It should be noted that the first predetermined distance, the second predetermined distance, the third predetermined distance, and the fourth predetermined distance described in the context of the present disclosure may all be flexibly set based on the actual obstacle avoidance requirements and cleaning requirements of the self-mobile robot.

In step 308, a perpendicular projection contour line of the partial convex hull envelope surface on the ground plane is acquired.

The partial convex hull envelope surface reflects the shape information of the second obstacle, that is, the contour information of the second obstacle. The partial convex hull envelope surface is perpendicularly projected onto the ground plane, which is equivalent to projecting the second obstacle onto the ground plane perpendicularly. The perpendicular projection contour line of the partial convex hull envelope surface on the ground plane is the projection of the outermost edge of the obstacle onto the ground plane. In other words, traveling along the perpendicular projection contour line, that is, traveling along the contour of the outermost edge of the second obstacle, can successfully avoid the second obstacle.

Similarly, it should be noted that when acquiring information by the sensor, the self-mobile robot only needs to obtain at least obstacle information within the height range thereof; therefore, when acquiring a convex hull envelope surface reflecting the shape information of the second obstacle, the self-mobile robot only needs to obtain the partial convex hull envelope surface corresponding to the part of the second obstacle detected within the height range of the self-mobile robot.

In step 310, an obstacle avoidance route is determined based on the perpendicular projection contour line.

In an embodiment, the perpendicular projection contour line may be directly used as the obstacle avoidance route.

Specifically, smoothing processing is performed at the intersection position of each two adjacent line segments of the perpendicular projection contour line, and the smoothed perpendicular projection contour line is more suitable to be used as a route for the self-mobile robot to travel.

In another embodiment, the perpendicular projection contour line may be offset by a specified offset distance toward a direction away from the second obstacle as the obstacle avoidance route.

In step 312, in response to a distance between the self-mobile robot and any target obstacle being less than or equal to a first predetermined distance, an obstacle avoidance route corresponding to the target obstacle is acquired from set obstacle avoidance routes as a traveling route for the self-mobile robot to perform an obstacle avoidance traveling action.

The perpendicular projection contour line of the partial convex hull envelope surface of the second obstacle on the ground plane is set as the obstacle avoidance route. In this way, when the self-mobile robot performs obstacle avoidance on the second obstacle, the self-mobile robot can directly travel along the obstacle avoidance route, thereby avoiding the problem of the unreasonable meandering of the obstacle avoidance route caused by continuously detecting the obstacle and then continuously triggering the obstacle avoidance action in the related art.

In an embodiment, step 312 includes: determining the matching between the first position information of the target obstacle and the acquired three-dimensional point cloud data or the acquired point cloud cluster; and determining that the first position information matches the acquired three-dimensional point cloud data or the acquired point cloud cluster, and determining an obstacle avoidance route corresponding to the acquired three-dimensional point cloud data or the acquired point cloud cluster as the obstacle avoidance route for the target obstacle.

In other words, when it is detected that obstacle avoidance needs to be performed on any target obstacle, if the first position information of the target obstacle matches any group of acquired three-dimensional point cloud data or acquired point cloud clusters, it indicates that an obstacle avoidance route has been set for the target obstacle. In this case, the obstacle avoidance route corresponding to the acquired three-dimensional point cloud data or the acquired point cloud cluster may be invoked as the traveling route for the target obstacle.

According to the above technical solutions, the perpendicular projection contour line of the partial convex hull envelope surface of the obstacle on the ground plane is used as the obstacle avoidance route. Compared with the technical solution of continuously detecting the obstacle and then continuously triggering the obstacle avoidance action in the related art, as shown in FIG. 4, the self-mobile robot 602 may directly travel along the outer edge contour of the obstacle 604, which avoids the problem of a meandering and complex obstacle avoidance route caused by continuously triggering the obstacle avoidance action, such that the obstacle avoidance route is simplified as much as possible, the length of the obstacle avoidance route is reduced, and the energy consumption for obstacle avoidance is reduced, while enabling the traveling action of the self-mobile robot 602 to be more intelligent and ornamental, thereby improving the user experience. In addition, by traveling along the outer edge contour of the obstacle 604, the self-mobile robot 602 not only avoids the obstacle but also maximizes the movable range, thereby reducing the missed area in the cleaning process and improving the cleaning effect.

To sum up, the technical solutions can be understood as follows. A large-range detection is performed on the current environment, a plurality of obstacles are detected, and obstacle avoidance routes are generated for the plurality of obstacles. When traveling to any of the plurality of obstacles, the obstacle avoidance route generated for the obstacle may be invoked as the traveling route.

On this basis, the occasion to detect the current environment is particularly important.

Therefore, in an embodiment, the three-dimensional point cloud data may be acquired when an obstacle avoidance route detection start condition is satisfied, so as to start a detection of the current environment.

The obstacle avoidance route detection start condition is any one or a combination of more of the following: a duration from the start of the last obstacle avoidance route detection or the generation of the obstacle avoidance route reaches a specified duration; a traveling distance from a historical position at the end of the last obstacle avoidance route detection to a current position reaches a second predetermined distance; the set obstacle avoidance routes are all completely traveled; and the number of untraveled routes in all the set obstacle avoidance routes is less than or equal to a specified number.

If the duration from the start of the last obstacle avoidance route detection or the generation of the obstacle avoidance route reaches the specified duration, it is indicated that a long enough time has passed since the start of the last obstacle avoidance route detection, and the self-mobile robot is likely to have completely traversed the environment scanned in the start of the last obstacle avoidance route detection. Therefore, the obstacle avoidance route detection may be restarted.

If the traveling distance from the historical position at the end of the last obstacle avoidance route detection to the current position reaches the second predetermined distance, it is indicated that the self-mobile robot has traveled a long distance since the start of the last obstacle avoidance route detection, and the self-mobile robot is likely to have completely traversed the environment scanned in the start of the last obstacle avoidance route detection, or is likely to have completely traveled the obstacle avoidance route generated in the last obstacle avoidance route detection. Therefore, the obstacle avoidance route detection may be restarted. Similarly, if all the set obstacle avoidance routes have been completely traveled, or the number of untraveled routes in all the set obstacle avoidance routes is less than or equal to the specified number, that is, there are not many set obstacle avoidance routes left, the self-mobile robot may also restart the obstacle avoidance route detection for the current environment.

According to the above technical solutions, the self-mobile robot may trigger obstacle avoidance route detection multiple times to adapt to the current environment and identify the obstacle in time, thereby improving the effectiveness of the traveling behavior.

In addition, before acquiring the first position information of the obstacle feature points, an obstacle type may also be acquired. An obstacle of a specified type refers to an irregular obstacle that is not disposed perpendicular to the ground or the height thereof affects the normal functioning of the wall-following sensor.

If the obstacle type is the specified type, it is indicated that the wall-following sensor cannot function normally, and the second sensor including the perpendicular line laser sensor, the horizontal line laser sensor, or the 3D TOF sensor may be started to perform the obstacle avoidance route detection described in the above technical solutions.

Otherwise, if the obstacle type is not the specified type, that is, the obstacle can be effectively identified by the wall-following sensor, the second position information of the obstacle in the current environment may be directly acquired by the wall-following sensor, so as to generate the corresponding obstacle avoidance route based on the second position information. In this way, as long as the wall-following sensor can work effectively, the wall-following sensor is used to improve the convenience of the obstacle avoidance detection; the obstacle avoidance route detection described in the above technical solutions is started only when the wall-following sensor cannot function effectively, thereby improving the obstacle avoidance intelligence of the self-mobile robot and planning an obstacle avoidance route reasonably.

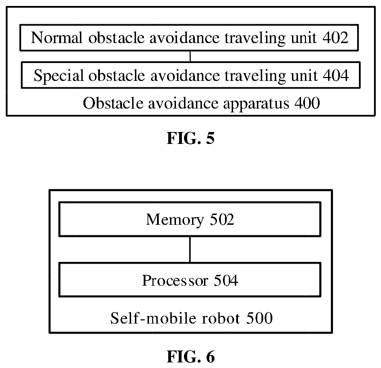

FIG. 5 shows a block diagram of an obstacle avoidance apparatus according to another embodiment of the present disclosure.

As shown in FIG. 5, an obstacle avoidance apparatus 400 according to another embodiment of the present disclosure is configured as a self-mobile robot including a first sensor and a second sensor. The obstacle avoidance apparatus 400 includes: a normal obstacle avoidance traveling unit 402, configured to perform, by the first sensor, a first information acquisition on a first obstacle with at least a first height range on an outermost surface, and set the self-mobile robot to travel along the outermost surface of the first height range of the first obstacle; and a special obstacle avoidance traveling unit 404, configured to perform, by the second sensor, a second information acquisition on a second obstacle with at least a second height range on an outermost surface, and set the self-mobile robot to perform an obstacle avoidance traveling action along an outer surface of at least a part of the height range of the second obstacle, where the second height range is not completely the same as the first height range.

In an embodiment, the first sensor is a wall-following sensor, and the first obstacle includes a wall; the second sensor is a non-wall-following sensor.

In an embodiment, the first height range is a perpendicular arrangement height range or a perpendicular measurement height range of the first sensor; the second height range is a height range of the self-mobile robot.

In an embodiment, the special obstacle avoidance traveling unit 404 includes: a three-dimensional point cloud data acquisition unit, configured to acquire, by the second sensor, three-dimensional point cloud data for the second obstacle with at least the second height range on the outermost surface; a projection contour line acquisition unit, configured to determine a perpendicular projection contour line of the second obstacle based on the three-dimensional point cloud data; an obstacle avoidance route setting unit, configured to determine an obstacle avoidance route based on the perpendicular projection contour line; and an obstacle avoidance control unit, configured to acquire, in response to a distance between the self-mobile robot and any target obstacle being less than or equal to a first predetermined distance, an obstacle avoidance route corresponding to the target obstacle from set obstacle avoidance routes as a traveling route for the self-mobile robot to perform the obstacle avoidance traveling action.

In an embodiment, the projection contour line acquisition unit includes: a point cloud data clustering unit, configured to perform clustering on the three-dimensional point cloud data to obtain a point cloud cluster corresponding to the second obstacle; an envelope surface generation unit, configured to determine a partial convex hull envelope surface of the second obstacle based on the point cloud cluster; and a projection contour line acquisition unit, configured to acquire a perpendicular projection contour line of the partial convex hull envelope surface on the ground plane.

In an embodiment, the three-dimensional point cloud data acquisition unit is configured to: acquire the first position information of obstacle feature points, where the first position information includes horizontal position information and height information; and generate a three-dimensional rasterized map with the three-dimensional point cloud data based on the first position information of the obstacle feature points.

In an embodiment, the obstacle avoidance apparatus 400 further includes: a sensor selection unit, configured to acquire an obstacle type before the three-dimensional point cloud data acquisition unit acquires the first position information; determine that the obstacle type is the specified type, and allow to acquire the first position information of the obstacle feature points; and determine that the obstacle type is not the specified type, and acquire second position information of an obstacle in the current environment through an wall-following sensor, so as to generate a corresponding obstacle avoidance route based on the second position information.

In an embodiment, the three-dimensional point cloud data acquisition unit is configured to: determine that an obstacle avoidance route detection start condition is satisfied, and acquire the three-dimensional point cloud data. The obstacle avoidance route detection start condition is any one or a combination of more of the following: a duration from the start of the last obstacle avoidance route detection or the generation of the obstacle avoidance route reaches a specified duration; a traveling distance from a historical position at the end of the last obstacle avoidance route detection to a current position reaches a second predetermined distance; the set obstacle avoidance routes are all completely traveled; and the number of untraveled routes in all the set obstacle avoidance routes is less than or equal to a specified number.

In an embodiment, the point cloud data clustering unit is configured to: determine feature point sets in which a point-to-point distance is less than or equal to a third predetermined distance in the three-dimensional point cloud data; and perform clustering on each feature point set to obtain a corresponding point cloud cluster for each feature point set.

In an embodiment, the obstacle avoidance route setting unit is configured to: perform smoothing processing at the intersection position of each two adjacent line segments of the perpendicular projection contour line to obtain the obstacle avoidance route.

In an embodiment, the obstacle avoidance control unit is configured to: determine the matching between first position information of the target obstacle and the acquired three-dimensional point cloud data or the acquired point cloud cluster; and determine that the first position information matches the acquired three-dimensional point cloud data or the acquired point cloud cluster, and determine an obstacle avoidance route corresponding to the acquired three-dimensional point cloud data or the acquired point cloud cluster as the obstacle avoidance route for the target obstacle.

The obstacle avoidance apparatus 400 adopts the solution described in any one of the above embodiments and thus has all the technical effects described above, which will not be reiterated here.

FIG. 6 shows a block diagram of a self-mobile robot according to an embodiment of the present disclosure.

As shown in FIG. 6, a self-mobile robot 500 according to an embodiment of the present disclosure includes: at least one memory 502; and a processor 504 communicatively connected to the at least one memory 502. The memory stores instructions executable by the at least one processor 504, and the instructions are configured for performing the solution described in any one of the above embodiments. Therefore, the self-mobile robot 500 has the same technical effects as those described in any one of the above embodiments, which will not be reiterated here.

In addition, the embodiments of the present disclosure provide a computer-readable storage medium, storing computer-executable instructions for performing the following steps: acquiring three-dimensional point cloud data; performing clustering on the three-dimensional point cloud data to obtain a point cloud cluster corresponding to the second obstacle; determining a partial convex hull envelope surface of the second obstacle based on the point cloud cluster; acquiring a perpendicular projection contour line of the partial convex hull envelope surface on the ground plane; determining an obstacle avoidance route based on the perpendicular projection contour line; and acquiring, in response to a distance between the self-mobile robot and any target obstacle being less than or equal to a first predetermined distance, an obstacle avoidance route corresponding to the target obstacle from set obstacle avoidance routes as a traveling route for the self-mobile robot.

It should be noted that the above functions or steps that can be implemented by the computer-readable storage medium or the self-mobile robot may correspondingly refer to the relevant descriptions in the aforementioned method embodiments. To avoid repetition, the details will not be elaborated here.

The technical solutions of the present disclosure are described in detail above with reference to the drawings. According to the technical solutions of the present disclosure, the perpendicular projection contour line of the partial convex hull envelope surface of the obstacle on the ground plane is used as the obstacle avoidance route. Compared with the technical solution of continuously detecting the obstacle and then continuously triggering the obstacle avoidance action in the related art, the self-mobile robot may directly travel along the outer edge contour of the obstacle, which avoids the problem of a meandering and complex obstacle avoidance route caused by continuously triggering the obstacle avoidance action, such that the obstacle avoidance route is simplified as much as possible, the length of the obstacle avoidance route is reduced, and the energy consumption for obstacle avoidance is reduced, while enabling the traveling action of the self-mobile robot to be more intelligent and ornamental, thereby improving the user experience. In addition, by traveling along the outer edge contour of the obstacle, the self-mobile robot not only avoids the obstacle but also maximizes the movable range, thereby reducing the missed area in the cleaning process and improving the cleaning effect of the self-mobile robot.

It should be understood that the term "and/or" as used herein is merely a way to describe an association relationship between associated objects, indicating that three possible relationships may exist. For example, "A and/or B" can represent: the existence of A alone, the simultaneous existence of A and B, and the existence of B alone. In addition, the character "/" herein generally indicates an "or" relationship between the associated objects before and after the "/".

It should be understood that although the terms "first", "second", and the like may be used in the embodiments of the present disclosure to describe predetermined distances, such predetermined distances should not be limited to these terms. These terms are only used to distinguish predetermined distances from each other. For example, the first predetermined distance may also be referred to as the second predetermined distance, and similarly, the second predetermined distance may also be referred to as the first predetermined distance, without departing from the scope of the embodiments of the present disclosure.

It should be noted that although several modules or units of the device for action execution are mentioned in the above detailed description, such division is not mandatory. In practice, according to the embodiments of the present disclosure, the features and functions of two or more modules or units described above may be embodied in one module or unit. Conversely, the features and functions of one module or unit described above may be further divided to be embodied by a plurality of modules or units.

In addition, the various functional units in the embodiments of the present disclosure may be integrated into one processing unit, or the various units may physically exist separately, or two or more units may be integrated into one unit. The integrated unit may be implemented in the form of hardware, or in the form of hardware plus software functional unit.

The terms used in the embodiments of the present disclosure are for the purpose of describing particular embodiments only and are not intended to be limiting to the present disclosure. As used in the embodiments and the appended claims of the present disclosure, the singular forms "a", "an", and "the" are intended to include the plural forms as well, unless the context clearly indicates otherwise.

In addition, although the steps of the method in the present disclosure are described in a specific order in the drawings, this does not require or imply that these steps are necessarily performed in this specific order, or that all of the steps shown are necessarily performed to achieve the desired results. Additionally or alternatively, some steps may be omitted, a plurality of steps may be combined into one step for execution, and/or one step may be divided into a plurality of steps for execution, among other variations.

Based on the description of the foregoing embodiments, a person skilled in the art can easily understand that the exemplary embodiments described herein may be implemented by software, or may be implemented by software in combination with necessary hardware. Therefore, the technical solutions according to the embodiments of the present disclosure may be implemented in the form of a software product. The software product may be stored in a non-volatile storage medium (which may be a CD-ROM, a USB flash drive, a mobile hard disk, or the like) or on a network, and includes several instructions for instructing a computing device (which may be a personal computer, a server, a mobile terminal, a network device, or the like) to perform the method according to the embodiments of the present disclosure.

Other embodiments of the present disclosure are apparent to those skilled in the art from consideration of the specification and practice of the present disclosure disclosed herein. The present disclosure is intended to cover any variations, uses, or adaptations of the present disclosure. These variations, uses, or adaptations follow the general principles of the present disclosure and include known common knowledge or customary technical means in the art undisclosed in the present disclosure. The specification and embodiments are only considered as exemplary, and the true scope and spirit of the present disclosure are indicated in the appended claims.

## Claims

1. An obstacle avoidance method for a self-mobile robot, wherein the self-mobile robot comprises a first sensor and a second sensor, and the obstacle avoidance method comprises:
performing, by the first sensor, a first information acquisition on a first obstacle with at least a first height range on an outermost surface, and setting the self-mobile robot to travel along the outermost surface of the first height range of the first obstacle;
and
performing, by the second sensor, a second information acquisition on a second obstacle with at least a second height range on an outermost surface, and setting the self-mobile robot to perform an obstacle avoidance traveling action along an outer surface of at least a part of the height range of the second obstacle,
wherein the second height range is not completely the same as the first height range.

2. The obstacle avoidance method according to claim 1, wherein
the first sensor is a wall-following sensor, and the first obstacle comprises a wall; and
the second sensor is a non-wall-following sensor.

3. The obstacle avoidance method according to claim 1, wherein
the first height range is a perpendicular arrangement height range or a perpendicular measurement height range of the first sensor; and
the second height range is a height range of the self-mobile robot.

4. The obstacle avoidance method according to claim 1, wherein performing, by the second sensor, the second information acquisition on the second obstacle with at least the second height range on the outermost surface, comprises:
acquiring, by the second sensor, three-dimensional point cloud data for the second obstacle with at least the second height range on the outermost surface; and
setting the self-mobile robot to perform the obstacle avoidance traveling action along the outer surface of at least the part of the height range of the second obstacle, comprises:
determining a perpendicular projection contour line of the second obstacle based on the three-dimensional point cloud data;
determining an obstacle avoidance route based on the perpendicular projection contour line; and
acquiring, in response to a distance between the self-mobile robot and any target obstacle being less than or equal to a first predetermined distance, an obstacle avoidance route corresponding to the target obstacle from set obstacle avoidance routes as a traveling route for the self-mobile robot to perform the obstacle avoidance traveling action.

5. The obstacle avoidance method according to claim 4, wherein determining the perpendicular projection contour line of the second obstacle based on the three-dimensional point cloud data, comprises:
performing clustering on the three-dimensional point cloud data to obtain a point cloud cluster corresponding to the second obstacle;
determining a partial convex hull envelope surface of the second obstacle based on the point cloud cluster; and
acquiring a perpendicular projection contour line of the partial convex hull envelope surface on a ground plane.

6. The obstacle avoidance method according to claim 5, wherein acquiring the three-dimensional point cloud data, comprises:
acquiring first position information of obstacle feature points, wherein the first position information comprises horizontal position information and height information; and
generating a three-dimensional rasterized map with the three-dimensional point cloud data based on the first position information of the obstacle feature points.

7. The obstacle avoidance method according to claim 6, wherein before acquiring the first position information of the obstacle feature points, the method further comprises:
acquiring an obstacle type;
determining that the obstacle type is the specified type, and allowing to enter the step of acquiring the first position information of the obstacle feature points; and
determining that the obstacle type is not the specified type, and entering the step of performing, by the first sensor, the first information acquisition on the first obstacle with at least the first height range on the outermost surface.

8. The obstacle avoidance method according to claim 6, wherein acquiring the three-dimensional point cloud data, comprises:
determining that an obstacle avoidance route detection start condition is satisfied, and acquiring the three-dimensional point cloud data, wherein the obstacle avoidance route detection start condition is any one or a combination of more of the following:
a duration from a start of last obstacle avoidance route detection or generation of the obstacle avoidance route reaches a specified duration;
a traveling distance from a historical position at an end of the last obstacle avoidance route detection to a current position reaches a second predetermined distance;
the set obstacle avoidance routes are all completely traveled; and
a number of untraveled routes in all the set obstacle avoidance routes is less than or equal to a specified number.

9. The obstacle avoidance method according to claim 5, wherein performing clustering on the three-dimensional point cloud data to obtain the point cloud cluster corresponding to the second obstacle, comprises:
determining feature point sets in which a point-to-point distance is less than or equal to a third predetermined distance in the three-dimensional point cloud data; and
performing clustering on each feature point set to obtain a corresponding point cloud cluster for each feature point set.

10. The obstacle avoidance method according to claim 5, wherein determining the obstacle avoidance route based on the perpendicular projection contour line, comprises:
performing smoothing processing at an intersection position of each two adjacent line segments of the perpendicular projection contour line to obtain the obstacle avoidance route; or
offsetting the perpendicular projection contour line by a specified offset distance toward a direction away from the second obstacle as the obstacle avoidance route.

11. The obstacle avoidance method according to claim 5, wherein acquiring the obstacle avoidance route corresponding to the target obstacle from several said set obstacle avoidance routes, comprises:
determining matching between first position information of the target obstacle and the acquired three-dimensional point cloud data or the acquired point cloud cluster; and
determining that the first position information matches the acquired three-dimensional point cloud data or the acquired point cloud cluster, and determining an obstacle avoidance route corresponding to the acquired three-dimensional point cloud data or the acquired point cloud cluster as the obstacle avoidance route for the target obstacle.

12. An obstacle avoidance apparatus for a self-mobile robot, wherein the self-mobile robot comprises a first sensor and a second sensor, and the obstacle avoidance apparatus comprises:
a normal obstacle avoidance traveling unit, configured to perform, by the first sensor, a first information acquisition on a first obstacle with at least a first height range on an outermost surface, and set the self-mobile robot to travel along the outermost surface of the first height range of the first obstacle; and
a special obstacle avoidance traveling unit, configured to perform, by the second sensor, a second information acquisition on a second obstacle with at least a second height range on an outermost surface, and set the self-mobile robot to perform an obstacle avoidance traveling action along an outer surface of at least a part of the height range of the second obstacle, wherein the second height range is not completely the same as the first height range.

13. A self-mobile robot, comprising: at least one processor; and a memory communicatively connected to the at least one processor,
wherein the memory stores instructions executable by the at least one processor, and the instructions are configured for performing the method according to any one of claims 1 to 11.

14. A computer-readable storage medium, storing computer-executable instructions for performing a process of the method according to any one of claims 1 to 11.
